# EUROPEAN PATENT SPECIFICATION

(11) **EP 1 512 985 B1**
(45) Date of publication and mention of the grant of the patent: **31.05.2017**
(21) Application number: 04020084.2
(22) Date of filing: 24.08.2004
(51) Int. Cl.: G01S 19/34, G01S 19/35, G01S 19/23

(54) **Combined navigation satellite receiver/communications device**
Kombinierter Satellitennavigationsempfänger / Kommunikationsgerät
Combination d'un récepteur de navigation par satellite avec un dispositif de télécommunication

(30) Priority: 04.09.2003 US 656078
(43) Date of publication of application: 09.03.2005
(60) Divisional application: 10174878.8
(73) Proprietor: eRide, Inc., San Francisco, California 94118-1837 (US); Seiko Epson Corporation, Tokyo 163 (JP)
(72) Inventor: McBurney, Paul W., San Francisco California 94118 (US); Woo, Arthur N., Cupertino California 95014 (US); Rode, France (NMI), Los Altos California 94024 (US)
(74) Representative: Grünecker Patent- und Rechtsanwälte PartG mbB

(56) References cited:
- EP-A- 1 223 434
- WO-A-02/09310
- WO-A-03/098258
- US-A- 6 122 506
- US-A1- 2003 214 436
- US-B1- 6 188 351
- US-B1- 6 211 820
- US-B1- 6 424 826

## Description

The present invention relates to combinations of navigation satellite receivers and communication devices, and more particularly to sharing crystal oscillators between GPS receivers and cellphone handsets.

Most consumer electronic devices are mass produced and their sales are very dependent on how they are priced. One way to offer better prices is to reduce manufacturing costs, e.g., the cost of labor and the components used. Combinations of navigation satellite receivers and communication devices are now available, and many conventional commercial products provide one set of crystals and crystal oscillators for the navigation satellite receiver part, and a separate set for the communication devices.

One of the present inventors, Paul McBurney, together with some others, have recently filed several United States Patent Applications for inventions relating to GPS receivers. These are summarized in Table II.

US-A- 6 112 506 describes a combination of a GPS and a GSM receiver including a single oscillator for providing a reference frequency. A deviation of this reference frequency is determined by an additional frequency correction beacon signal received by the GSM section from a remote base station.

EP-A- 1 223 434 describes a device including a GPS and a communication sub section sharing common circuits for reception of the GPS and the communication signal. Both signals are received by separate antennas, and successfully down converted and demodulated in a common transmission path. Accordingly, only a single frequency synthesizer is required.

US-B- 6 188 351 relates to a reception of a GPS signal in a combination of a GPS receiver and a mobile phone. In order to assist the GPS section, frequency information of the communication network is used.

Another device comprising a communication and a GPS section is described in US-A-2003/214 436). Only a single oscillator is used providing a reference frequency to both the communication and the GPS section. The communication receiver determines the frequency offset in the reference frequency based on information received from a base station, and compensates the frequency offset.

US-B- 6 424 826 describes a mobile terminal including a communication transceiver and a GPS receiver. A common frequency synthesizer is provided for generating a reference frequency to both the communication and the GPS system. No correction of the generated frequency based on a received GPS signal is mentioned.

A wireless communication device including a navigation receiver is described in US-B- 6 211 820. A frequency of a free running internal clock is used for the communication system and a GPS receiver. The accuracy of the generated frequency is improved by correcting the frequency signal based on the timing of the received communication signal.

Another communication and navigation device is described in WO-A- 03/098258. A high accuracy frequency is provided by a single oscillation unit. The oscillation unit is controlled based on the tracked frequency of the communication section and the temperature of the oscillation unit.

In WO-A- 02/09 310 a common frequency synthesizer for generating the necessary frequencies to a navigation and a communication receiver is described. The frequencies are controlled by an automatic frequency control section included in the communication processor.

It is the object of the present invention to improve both manufacturing costs and device performance when combining a navigation receiver and a communication device.

This is achieved by the features of the independent claim.

These and other objects and advantages of the present invention will no doubt become obvious to those of ordinary skill in the art after having read the following detailed description.
Fig. 1 is a schematic diagram of a combination GPS satellite navigation receiver part and communication device system in which the communication device's VCO provides a reference frequency assist to the GPS part;
Fig. 2 is a schematic diagram of a combination GPS satellite navigation receiver and communication device system in which the communication VCO device's provides a reference frequency assist to the GPS part and therefore eliminates a GPS crystal oscillator; and
Fig. 3 is a schematic diagram of a multiple re-use of frequencies in a combination GPS satellite navigation receiver and communication device system embodiment of the present invention.

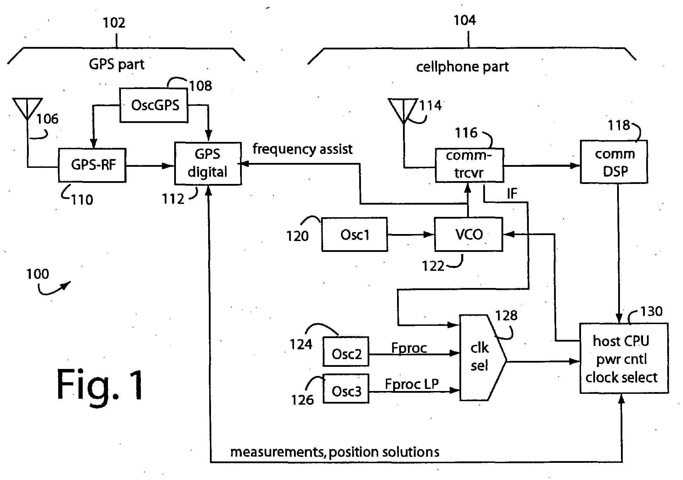

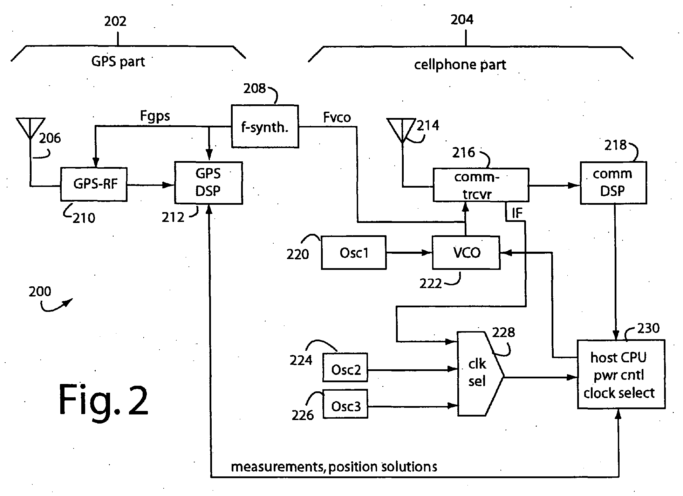

Embodiments shown in Fig 1. and Fig 2. are for illustrational purposes only.

Fig. 1 illustrates a basic integrated combination of a satellite navigation receiver and communication device system, and referred to by the general reference numeral 100. The system 100 has two parts, including a navigation receiver in the form of a global position system (GPS) receiver 102, and communication device in the form of a cellphone 104 that provides reference frequency assistance to the GPS part 102. The GPS part 102 is either a self-contained positioning model or a measurement model with positioning code executed on a host CPU.

In general, the present invention provide for sharing of oscillators to reduce the number of crystals and crystal oscillators needed in the implementations, e.g., to save on the manufacturing costs. In a mass production market, small price reductions frequently results in significantly higher sales volumes.

In system 100, the GPS part 102 comprises a GPS patch antenna 106, a GPS-oscillator 108, a GPS RF-receiver 110, and a GPS digital signal processor 112. The GPS part 102 can simply take measurements and forward them to a host CPU for position solution processing, or process the position solutions itself. Sharing a highly capable host CPU with the cellphone part 104 provides a way to reduce overall costs.

The cellphone part 104 comprises a cellphone antenna 114, a communications transceiver 116, a cellphone digital signal processor (DSP) 118, a first oscillator (osc1) 120 that feeds a voltage controlled oscillator (VCO) 122, a second oscillator (osc2) 124, a third oscillator (osc3) 126, and a clock selector 128. A host CPU 130 provides high level functionality to both the GPS part 102 and the cellphone part 104.

Several crystal re-use and frequency sharing arrangements are possible. For example, the GPS part can be arranged to supply a reference crystal frequency to the phone part to re-use a crystal, e.g., to eliminate the need for a VCO crystal oscillator in the communications device. The GPS could also provide accurate frequency to the communications device to improve its acquisition and tracking of the communications VCO; or/and
provide a phone processor clock in both nominal and high power consumption environments; or/and be used to source a frequency synthesizer to supply any continuous frequency within its generation range; or/and can supply time events to the host CPU 130 that are accurate GPS time events; or/and can supply time events in host CPU time frame via an offset from GPS system time; or/and can supply real-time-clock capabilities to host CPU.
The oscillators referred to herein include OscGPS 108 (Fig. 1) which generates all frequencies for GPS RF and digital processing. Osc1 120 produces a reference for the communications VCO and synthesizes all the RF frequencies needed for the communications device, e.g., a high RF frequency and an intermediate IF frequency. The Osc2 124 produces "Fproc" as the normal operating frequency for the communications CPU, and Osc3 126 for low-power frequency "FprocLP" used for idle, standby or off times.

Fig. 2 illustrates another integrated combination of a satellite navigation receiver and communication device system, and referred to by the general reference numeral 200. The system 200 has a global position system (GPS) receiver part 202, and a cellphone part 204 wherein the cell phone part 204 provides a reference frequency good enough to eliminate the need for a separate GPS crystal oscillator in the GPS part 202.

In system 200, the GPS part 202 comprises a GPS patch antenna 206, a GP-frequency synthesizer 208, a GPS RF-receiver 210, and a GPS digital signal processor 212. The GPS-synthesizer 208 eliminates the need of a GPS crystal oscillator, e.g., GPS-oscillator 108, by synthesizing the GPS reference frequency (Fgps) directly from the VCO frequency (Fvco). When Fvco is locked by the communications system reference standards, the frequency is very exact and dependable.

The cellphone part 204 comprises a cellphone antenna 214, a communications transceiver 216, a cellphone digital signal processor (DSP) 218, a first oscillator (osc1) 220 that feeds a voltage controlled oscillator (VCO) 222, a second oscillator (osc2) 224, a third oscillator (osc3) 226, and a clock selector 228. A host CPU 230 provides high level functionality to both the GPS part 202 and the cellphone part 204. The first oscillator (osc1) 220 is typically a

The oscillators referred to herein include OscGPS 108 (Fig. 1) which generates all frequencies for GPS RF and digital processing. Osc2 120 produces a reference for the communications VCO and synthesizes all the RF frequencies needed for the communications device, e.g., a high RF frequency and an intermediate IF frequency. The Osc2 124 produces "Fproc" as the normal operating frequency for the communications CPU, and Osc3 126 for low-power frequency "FprocLP" used for idle, standby or off times.

Fig. 2 illustrates another integrated combination of a satellite navigation receiver and communication device system embodiment of the present invention, and referred to by the general reference numeral 200. The system 200 has a global position system (GPS) receiver part 202, and a cellphone part 204 wherein the cell phone part 204 provides a reference frequency good enough to eliminate the need for a separate GPS crystal oscillator in the GPS part 202.

In system 200, the GPS part 202 comprises a GPS patch antenna 206, a GP-frequency synthesizer 208, a GPS RF-receiver 210, and a GPS digital signal processor 212. The GPS-synthesizer 208 eliminates the need of a GPS crystal oscillator, e.g., GPS-oscillator 108, by synthesizing the GPS reference frequency (Fgps) directly from the VCO frequency (Fvco). When Fvco is locked by the communications system reference standards, the frequency is very exact and dependable.

The cellphone part 204 comprises a cellphone antenna 214, a communications transceiver 216, a cellphone digital signal processor (DSP) 218, a first oscillator (osc1) 220 that feeds a voltage controlled oscillator (VCO) 222, a second oscillator (osc2) 224, a third oscillator (osc3) 226, and a clock selector 228. A host CPU 230 provides high level functionality to both the GPS part 202 and the cellphone part 204. The first oscillator (osc1) 220 is typically a temperature compensated crystal oscillator (TCXO). The third oscillator (osc3) 226 is typically a 32-KHz real time clock (RTC) that can be based on a watch crystal.

One advantage of GPS is that high accuracy positions can be obtained even while depending on low cost crystal oscillator reference frequency sources. But problems can arise when the GPS reference frequency is derived from a communications VCO. Frequency jumps can afflict the GPS reference frequency when the communications VCO transitions between different cell towers, e.g., because of different base transmitter frequency offsets, and because the velocity vector to respective towers can be very different. The resulting delta-Doppler can be significant. There can also be residual uncompensated frequency errors in the automatic frequency compensation (AFC) frequency loop of the communications device. The communications device can tolerate larger frequency errors in comparison to the data rate that can be tolerated by the GPS receiver. Reducing the frequency that the AFC loop updates can be used to minimize data processing and CPU loading. The residual frequency error can increase when the communications device goes into standby mode with the frequency control in open loop and drifts uncorrected.

Frequency stability is important in communication systems, but the data rate is much higher than the typical frequency errors so it can still be properly demodulated. The data is detected at a much higher bandwidth than the low frequency VCO hold off error. Unlike the GPS part, precise carrier tracking is not needed as long as the data can be demodulated properly. When frequency updates are received, such are band limited to reduce jump inputs into the VCO. But, signal outages and tower changes will nevertheless introduce frequency errors during open loop operation that adversely impact the GPS operation.

High frequency changes in the reference frequency for the GPS affects searching, and not the ultimate accuracy of GPS position solutions. Some problems accompany using a GPS reference frequency derived from a VCO. A NavData collection error occurs if the frequency jump during the 20-msec period is more than a half cycle of the data bit and the data will not be decoded correctly. A frequency assistance error occurs if the VCO error is driven by tower frequency error, communications velocity, or loop error. The GPS receiver encounters error when trying to cross-calibrate with the communications device frequency, e.g., a frequency assistance method embodiment of the present invention.

Sensitivity loss can occur. Narrow band integration is preferred in high sensitivity GPS receivers. The VCO frequency error causes an error in GPS measurement. If it is common mode, it effects the GPS drift estimate. An error in such frequency estimate causes errors in the frequency prediction of where to acquire the satellite. Any error increases the amount of search required, thus delaying the fix. Frequency errors in tracking the GPS signal cause position errors for long measurement integrations required for high sensitivity. An error in frequency during long correlations spreads the energy across many pseudorange code phases. Thus, signal power is lost and the true peak is not known.

In a PDC-telephone network, the typical error budget includes 0.1 PPM base station stability, 100 mph = 44 mls = 230Hz = 0.15PPM, loop budget 0.2PPM, all for total of almost 0.45PPM. Therefore using a VCO as a frequency source for a GPS receiver is practical. On the other hand, modern low-cost TCXO oscillators are able to provide similar or better stability if software modeling is used.

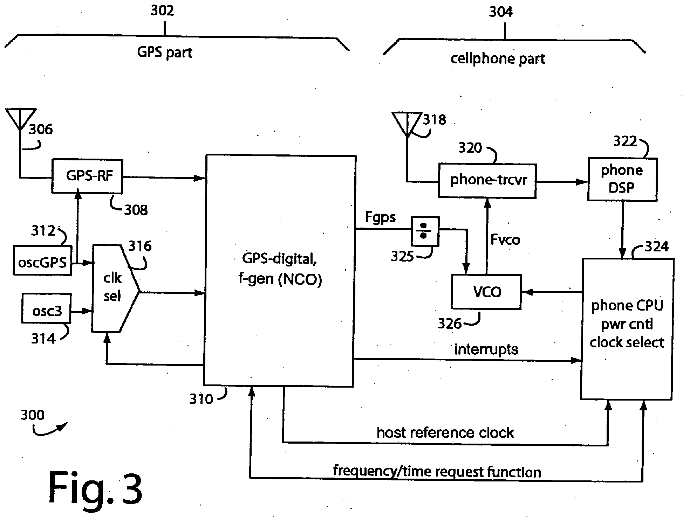

Fig. 3 illustrates a multiple re-use of frequencies in an integrated combination of a satellite navigation receiver and communication device system embodiment of the present invention, referred to by the general reference numeral 300. The system 300 has a GPS part 302 and a cellphone part 304 that are both integrated within the same portable or handheld device. The GPS part 302 includes a GPS antenna 306, a GPS RF-receiver 308, a GPS digital processor and frequency generator (chip) 310, a GPS oscillator (oscGPS) 312, and a low frequency oscillator (osc3) 314. A clock selector 316 selects between normal and low-power operation, e.g., by clock frequency choices. The cellphone part 304 includes a cellphone antenna 318, a communications transceiver 320, a digital signal processor 322, a phone CPU-power control-clock selector 324, a divider 325, and a voltage controlled oscillator (VCO) 326.

The divider 325 is included to increase the relative stability and accuracy of the reference frequency applied to VCO 326. The cellphone part 304 is not as dependent on its cellphone base station providing good reference frequencies for proper CDMA operation when it has very accurate references locally. If all the mobile phones operating in a base station area had such GPS-provided reference signals, the base station would not need to be equipped with expensive atomic clocks.

Communication devices generally need their own faster processor crystals, since the typical VCO oscillator operates in the relatively slow 10-13 MHz range. Some processors need to be able to switch to even higher frequencies for special communications functions. An intermediate frequency (IF) used in the down conversion process and produced in the RF chip can be used to run applications that require more computation resources. A low frequency oscillator is selected for low-power time maintenance, and is typically a 32-KHz crystal.

At turn-on, the GPS chip 310 loads a default startup processor clock selection for the phone CPU 324, e.g., from a non-volatile memory location. The host processor clock frequency is generated by multiplying GPS clock for input to a numeric controlled oscillator (NCO). Such NCO can then be digitally programmed to generate any output frequency up to half of its input frequency. The GPS part 302 puts itself into a sleeping, low-power mode and lets the user decide when to use the GPS. A host system begins operating when its clock is stable. The host can then chose different frequencies, via the communication between the host CPU 324 and GPS digital chip 310. The phone part 304 can request a general frequency number by sending a desired frequency. It can control when the VCO is turned onto the frequency to be used, e.g., 12.6 MHz for the Japanese PDC system. If the GPS part 302 is tracking GPS satellites and solving for its frequency error, it can then compensate the requested 12.6MHz by what it knows to be the error in the GPS crystal. Thus, it can provide a more stable frequency to the communications device VCO 326. If low-power mode is needed, the communications device 304 can request that the GPS part 302 enter low-power mode. It keeps time with the low frequency crystal input from osc3 314. If the GPS oscillator 312 can be made low-power, the 32kHz oscillator 314 can be eliminated. The GPS part 302 can send interrupts to the phone part 304 on time-events lines to wake certain processes that need to occur at regular but accurate intervals.

The GPS part 302 provides a VCO frequency corrected by GPS satellite time standards, and is very accurate. A variable VCO from the GPS part 302 can be supplied that is responsive to requests from the phone part 304, e.g., for frequency stepping operations needed in frequency-division multiple access (FDMA) systems. An analog sinusoidal voltage can be output by the GPS part 302 to approximate a crystal output. Such may be requested by using bits from the top of an adder for accurate phase. Such phase is converted with a table having more representative levels for a sinusoid rather understood that the disclosure is not to be interpreted as limiting. Various alterations and modifications will no doubt become apparent to those skilled in the art after having read the above disclosure. understood that the disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the "true" spirit and scope of the invention.

## Claims

1. A combination mobile device (300), comprising:
a mobile navigation receiver GPS part (302);
a mobile communications device cellphone part (304) integrated with the navigation receiver GPS part (302);
a single crystal oscillator (312) providing a GPS reference frequency (Fgps) and a multiple re-use of frequencies for RF-tuning (308, 320), down conversion and signal demodulation in both the navigation receiver GPS part (302) and communications device cellphone part (304);
a voltage controlled oscillator (326) in the mobile communications device cellphone part (302); **characterised by** a frequency divider (325) connected to a GPS digital processor (310) of the navigation receiver GPS part (302) for supplying a derivative of said GPS reference frequency to the voltage controlled oscillator (326);
a low-frequency oscillator (314) for low-power operation time maintenance;
a clock selector (316) intermediate to the single crystal oscillator (312) and the low-frequency oscillator (314) on one side and the GPS digital processor (310) and providing for a selection between the single crystal oscillator (312) for normal operation and the low-frequency oscillator (314) for the low-power operation.

2. The device of claim 1, wherein:
the navigation receiver GPS part (302) supplies said GPS reference frequency (Fgps) to the communications device cellphone part (304) to avoid using an independent less-accurate crystal, wherein communications receiver sensitivity is improved by decreasing the frequency uncertainty and initial frequency search space.

3. The device of claim 1, wherein:
the navigation receiver GPS part (302) supplies accurate frequency signal to the communications device cellphone part (304) to improve acquisition and tracking of VCO.

4. The device of claim 1, wherein:
the navigation receiver GPS part (302) provides the communications device cellphone part (304) with processor clock signals in nominal, and high power environments.

5. The device of claim 1, wherein:
the navigation receiver GPS part (302) supplies continuous frequency signals within a generation range of frequencies.

6. The device of claim 1, wherein the communications device cellphone part (304) is not dependent on a reference frequency being supplied from a cellular base station for its operation.

## Patentansprüche

1. Kombinations-Mobilvorrichtung (300), die umfasst:
einen GPS-Mobilnavigationsempfänger-Teil (302);
einen Mobiltelefon-Mobilkommunikationsgerät-Teil (304), der in den GPS-Mobilnavigationsempfänger-Teil (302) integriert ist;
einen Einkristall-Oszillator (312), der eine GPS-Bezugsfrequenz (Fgps) sowie mehrfache Wiederverwendung von Frequenzen für HF-Tuning (308, 320), Abwärts-Umsetzung und Signal-Demodulation sowohl in dem GPS-Mobilnavigationsempfänger-Teil (302) als auch dem Mobiltelefon-Mobilkommunikationsgerät-Teil (304) bereitstellt;
einen spannungsgesteuerten Oszillator (326) in dem Mobiltelefon-Mobilkommunikationsgerät-Teil (304);
**gekennzeichnet durch**
einen Frequenzteiler (325), der mit einem GPS-Digitalprozessor (310) des GPS-Mobilnavigationsempfänger-Teils (302) verbunden ist, um dem spannungsgesteuerten Oszillator (326) eine Ableitung der GPS-Bezugsfrequenz zuzuführen;
einen Niederfrequenz-Oszillator (314) für Niedrigenergie-Betriebszeit-Wartung;
einen Takt-Selektor (316) zwischen dem Einkristall-Oszillator (312) und dem Niederfrequenz-Oszillator (314) an einer Seite und dem GPS-Digitalprozessor (13), der eine Auswahl zwischen dem Einkristall-Oszillator (312) für normalen Betrieb und dem Niederfrequenz-Oszillator (14) für den Niedrigenergie-Betrieb ermöglicht.

2. Vorrichtung nach Anspruch 1, wobei:
der GPS-Mobilnavigationsempfänger-Teil (302) die GPS-Bezugsfrequenz (Fgps) dem Mobiltelefon-Mobilkommunikationsgerät-Teil (304) zuführt, um Verwendung eines unabhängigen weniger genauen Kristalls zu vermeiden, wobei Empfindlichkeit eines Kommunikations-Empfängers verbessert wird, indem die Frequenz-Unsicherheit und der Anfangsfrequenz-Suchraum reduziert werden.

3. Vorrichtung nach Anspruch 1, wobei:
der GPS-Mobilnavigationsempfänger-Teil (302) dem Mobiltelefon-Mobilkommunikationsgerät-Teil (304) ein genaues Frequenzsignal zuführt, um Erfassung und Verfolgung des VCO zu verbessern.

4. Vorrichtung nach Anspruch 1, wobei:
der GPS-Mobilnavigationsempfänger-Teil (302) dem Mobiltelefon-Mobilkommunikationsgerät-Teil (304) Prozessor-Taktsignale in Nenn- und Hochleistungs-Umgebungen bereitstellt.

5. Vorrichtung nach Anspruch 1, wobei:
der GPS-Mobilnavigationsempfänger-Teil (302) kontinuierliche Frequenzsignale innerhalb eines Erzeugungsbereiches von Frequenzen zuführt.

6. Vorrichtung nach Anspruch 1, wobei der Mobiltelefon-Mobilkommunikationsgerät-Teil (304) in seiner Funktion nicht abhängig von einer Bezugsfrequenz ist, die von einer zellularen Basisstation zugeführt wird.

## Revendications

1. Un dispositif mobile combiné (300), comprenant :
une partie GPS d'un récepteur de navigation mobile (302) ;
une partie de téléphone cellulaire d'un dispositif de communications mobile (304) intégrée à la partie GPS du récepteur (302) ;
un oscillateur à quartz unique (312) fournissant une fréquence de référence GPS (Fgps) et une réutilisation multiple de fréquences pour la syntonisation RF (308, 320), une down conversion et une démodulation de signal à la fois dans la partie GPS du récepteur de navigation (302) et la partie de téléphone cellulaire du dispositif de communications (304) ;
un oscillateur commandé en tension (326) dans la partie de téléphone cellulaire du dispositif de communications mobile (302) ;
**caractérisé par**
un diviseur de fréquence (325) connecté à un processeur numérique GPS (310) de la partie GPS du récepteur de navigation (302) pour fournir une dérivée de ladite fréquence de référence GPS à
l'oscillateur commandé en tension (326) ;
un oscillateur basse fréquence (314) pour le maintien d'une durée de fonctionnement à faible puissance;
un sélecteur d'horloge (316) placé entre l'oscillateur à quartz unique (312) et l'oscillateur basse fréquence (314) d'un côté et le processeur numérique GPS (310), et permettant une sélection entre l'oscillateur à quartz unique (312) pour un fonctionnement normal et l'oscillateur basse fréquence (314) pour un fonctionnement à faible puissance.

2. Le dispositif de la revendication 1, dans lequel :
la partie GPS du récepteur de navigation (302) fournit ladite fréquence de référence GPS (Fgps) à la partie de téléphone cellulaire du dispositif de communications (304) pour éviter l'usage d'un quartz indépendant moins précis, dans laquelle la sensibilité du récepteur de communications est améliorée en diminuant l'incertitude de la fréquence et l'espace de recherche de fréquence initiale.

3. Le dispositif de la revendication 1, dans lequel :
la partie GPS du récepteur de navigation (302) fournit un signal de fréquence précis à la partie de téléphone cellulaire du dispositif de communications (304) pour améliorer l'acquisition et le suivi d'un VCO.

4. Le dispositif de la revendication 1, dans lequel :
la partie GPS du récepteur de navigation (302) fournit à la partie de téléphone cellulaire du dispositif de communications (304) des signaux d'horloge de processeur dans des environnements nominaux et à haute puissance.

5. Le dispositif de la revendication 1, dans lequel :
la partie GPS du récepteur de navigation (302) fournit des signaux en fréquence continue au sein de plages de génération de fréquences.

6. Le dispositif de la revendication 1, dans lequel la partie de téléphone cellulaire du dispositif de communications (304) n'est pas dépendante d'une fréquence de référence fournie par une station de base cellulaire pour son fonctionnement.
